# EUROPÄISCHE PATENTSCHRIFT

(11) **EP 4 022 252 B1**
(45) Veröffentlichungstag und Bekanntmachung des Hinweises auf die Patenterteilung: **30.08.2023**
(21) Anmeldenummer: 20767989.5
(22) Anmeldetag: 31.08.2020
(51) Int. Cl.: G01B 17/02, G01N 29/28, G01N 29/22, G01N 29/24, G01N 29/265

(54) **ULTRASCHALLMESSEINHEIT**
ULTRASOUND MEASURING UNIT
UNITÉ DE MESURE ULTRASONORE

(30) Priorität: 29.08.2019 DE 102019123145
(43) Veröffentlichungstag der Anmeldung: 06.07.2022
(73) Patentinhaber: M&H Inprocess Messtechnik GmbH, 88289 Waldburg (DE); Karl Deutsch Prüf- und Messgerätebau GmbH & Co. KG, 42115 Wuppertal (DE)
(72) Erfinder: SEITZ, Matthias, 88276 Berg (DE); STEVES, Simon, 44879 Bochum (DE)
(74) Vertreter: Otten, Roth, Dobler & Partner mbB Patentanwälte
(86) Internationale Anmeldenummer: PCT/EP2020/074230
(87) Internationale Veröffentlichungsnummer: WO 2021/038106

(56) Entgegenhaltungen:
- JP-A- 2003 000 592
- JP-A- 2012 002 586
- US-A- 3 921 442
- US-A1- 2015 272 544
- US-A1- 2017 284 971

## Beschreibung

### Stand der Technik

Messvorrichtungen mit einem Ultraschallmesskopf sind beispielsweise aus der JP 2003-592 A, der US 2017/0284971 A1, der JP 2012-2586 A oder der US 3,921,442 A bekannt.

Eine bekannte Messvorrichtung umfasst einen Roboterarm, an welchem ein Ultraschallmesskopf montiert ist. Der Ultraschallmesskopf kann mittels des Roboterarms an definierte Positionen herangefahren werden, um an der definierten Position eine Messung mittels des Ultraschallmesskopfs auszuführen.

Ein Nachteil der bekannten Messvorrichtung ist, dass eine zu messende Position zunächst zu definieren ist. Das heißt, dass das zu messende Werkstück zunächst mit einem weiteren Messmittel vermessen werden muss, damit der Roboterarm den Ultraschallmesskopf so an die zu vermessende Position heranbewegen kann, dass eine Ultraschallmessung durchführbar ist. Messungen mit der Messvorrichtung sind somit zum einen vergleichsweise zeitintensiv und zum anderen auch vergleichsweise unsicher und kostenintensiv, da der Ultraschallmesskopf ggf. zu weit weg oder zu nah an die zu messende Oberfläche bewegt wird.

### Aufgabe und Vorteile der Erfindung

Aufgabe der vorliegenden Erfindung ist es, ein verbessertes Messinstrument mit einer Ultraschallmesseinheit bereitzustellen. Insbesondere ein Messinstrument mit einer verbesserten Ultraschallmesseinheit bereitzustellen, mittels welcher eine insbesondere automatische Ultraschallmessung vergleichsweise schnell, sicher und/oder präzise durchführbar ist.

Die Aufgabe wird durch die Merkmale des Anspruchs 1 gelöst.

In den abhängigen Ansprüchen sind vorteilhafte und zweckmäßige Weiterbildungen der Erfindung genannt.

Die Erfindung geht von einem Messinstrument mit einer Ultraschallmesseinheit aus.

Der Kern der Erfindung liegt darin, dass das Messinstrument ausgebildet ist, an eine Bewegungsachse einer Maschine angeordnet werden zu können, wobei im angeordneten Zustand der Ultraschallmesseinheit am Messinstrument mittels der Ultraschallmesseinheit eine Ultraschallmessung durchführbar ist, wobei die Ultraschallmesseinheit eine röhrenförmige Hülse und ein elastisches Trägerelement umfasst, wobei die röhrenförmige Hülse das elastische Trägerelement umschließt, wobei das elastische Trägerelement aus einem Ultraschallwellen-leitenden Material besteht, wobei an einem ersten Ende der röhrenförmigen Hülse das elastische Trägerelement über eine äußeren Rand der röhrenförmigen Hülse hervorsteht, wobei die röhrenförmige Hülse und das elastische Trägerelement dazu vorgesehen sind, bei einem Antastvorgang des Messinstruments, die zu messende Oberfläche insbesondere unmittelbar zu kontaktieren. Hierdurch ist eine Ultraschall-Messung mit einer vergleichsweise präzisen Wiederholgenauigkeit realisierbar.

Das Messinstrument ist beispielsweise in Form eines Messtasters, eines Abstandsmessgeräts und/oder eines Distanzmessgeräts ausgebildet. Das Messinstrument ist beispielsweise als ein Messtaster, z.B. als ein Touch-Probe-Messtaster ausgebildet. Denkbar ist auch, dass das Messinstrument als ein optisch arbeitendes Messinstrument ausgebildet ist.

Die Maschine ist vorteilhafterweise als eine Werkzeugmaschine oder als eine Messmaschine ausgebildet. Die Maschine ist beispielsweise als ein CNC-Bearbeitungszentrum vorhanden. Zum Beispiel ist die Werkzeugmaschine als ein Dreh- und/oder Fräszentrum ausgebildet. Vorteilhafterweise umfasst die Werkzeugmaschine mehrere zueinander bewegbare Maschinenachsen. Beispielsweise ist die Werkzeugmaschine als ein 3-Achs- oder als eine 5-Achs-Werkzeugmaschine ausgebildet. Beispielsweise ist die Messmaschine als eine Koordinatenmessmaschine ausgebildet. Vorteilhafterweise ist das elastische Trägerelement als ein Elastomer ausgebildet. Bevorzugterweise ist das elastische Trägerelement als ein Ultraschallwellen-Kopplungsmittel vorhanden. Beispielsweise ist das elastische Trägerelement aus dem bekannten Elastomer "Aqualene" oder dem bekannten Elastomer "ACE" der Firma "Innovation Polymers" aus Kanada ausgebildet. Bevorzugterweise bildet das elastische Trägerelement eine sogenannte Ultraschall-Vorlaufstrecke, eine Verzögerungsstrecke oder eine Delay-Line der Ultraschallmesseinheit. Vorteilhafterweise ist die röhrenförmige Hülse aus einem anderen Material ausgebildet, als das elastische Trägerelement. Insbesondere aufgrund der Verwendung des elastischen Trägerelements ist die Ultraschallmesseinheit, insbesondere das Messinstrument, ausgebildet, keine schallkoppelnde Flüssigkeit zur Ultraschallmessung zwischen zu messender Oberfläche eines Messobjekts und der Ultraschallmesseinheit, insbesondere dem elastischen Trägerelement zu benötigen. Die vorgeschlagene Ultraschallmesseinheit benötigt beispielsweise kein Ultraschallkopplungsgel. Vorteilhafterweise wird eine zu messende Oberfläche bei einer Messung unmittelbar und direkt mit dem elastischen Trägerelement und/oder mit der röhrenförmigen

Hülse kontaktiert. Beispielsweise wird eine zu messende Oberfläche bei einer Messung unmittelbar und direkt durch das elastische Trägerelement und/oder durch die röhrenförmige Hülse kontaktiert.

Vorteilhafterweise ist die röhrenförmige Hülse hohlzylinderartig ausgebildet. Beispielsweise ist die röhrenförmige Hülse als ein Hohlzylinder vorhanden. Vorteilhafterweise bildet eine äußere Stirnseite der hohlzylinderartigen röhrenförmigen Hülse den äußeren Rand. Beispielsweise ist der äußere Rand kreisringartig ausgebildet.

Weiter wird vorgeschlagen, dass die röhrenförmige Hülse aus einem Kunststoffmaterial ausgebildet ist. Beispielsweise ist die röhrenförmige Hülse aus einem Hartplastik ausgebildet. Hierdurch sind störendeReflexionen von Ultraschallwellen vermindert. Vorteilhafterweise ist die röhrenförmige Hülse aus einem Ultraschall-dämpfenden Material ausgebildet. Beispielsweise ist die röhrenförmige Hülse aus einem Material ausgebildet, welches Schallwellen im Ultraschallbereich vergleichsweise stark dämpft. Außerdem wird vorgeschlagen, dass die röhrenförmige Hülse das elastische Trägerelement formschlüssig umschließt. Denkbar ist, dass die röhrenförmige Hülse das elastische Trägerelement zumindest abschnittsweise formschlüssig umschließt. Hierdurch ist eine insbesondere unlösbare Verbindung der röhrenförmigen Hülse mit dem elastischen Trägerelement realisierbar. Vorteilhafterweise ist die röhrenförmige Hülse einteilig vorhanden. Denkbar ist auch, dass die röhrenförmige Hülse mehrteilig vorhanden ist.

Beispielsweise umfasst die röhrenförmige Hülse Montagemittel zur Montage der röhrenförmigen Hülse an die verbleibende Ultraschallmesseinheit. Die Montagemittel zur Montage der röhrenförmigen Hülse an die verbleibende Ultraschallmesseinheit sind vorteilhafterweise als Gewindemittel, beispielsweise als ein Gewinde vorhanden. Denkbar ist auch, dass die Montagemittel als ein Schnellverschlusssystem ausgebildet sind, z.B. in Form eines Bajonettverschluss. Denkbar ist auch, dass die röhrenförmige Hülse mit der verbleibenden Ultraschallmesseinheit unlösbar verbunden ist, z.B. geklebt oder verlötet. Beispielsweise ist die röhrenförmige Hülse an einem Verbindungsrand der Hülse mit der verbleibenden Ultraschallmesseinheit verbunden. Der Verbindungsrand der Hülse ist vorteilhafterweise gegenüberliegend und beabstandet zum äußeren Rand der Hülse vorhanden. Beispielsweise bilden der äußere Rand und der Verbindungsrand der Hülse jeweils eine Stirnseite der hohlzylinderartig ausgebildeten Hülse. Beispielsweise umfasst das Messinstrument ein Anbringelement zur Montage der verbleibenden Ultraschallmesseinheit, insbesondere zur Montage der röhrenförmigen Hülse an das Messinstrument. Zum Beispiel umfasst die verbleibende Ultraschallmesseinheit oder die röhrenförmige Hülse ein Anbringorgan zur Montage der verbleibenden Ultraschallmesseinheit am Messinstrument. Beispielsweise ist das Anbringorgan ein Teil der Montagemittel der röhrenförmigen Hülse. Vorteilhafterweise sind das Anbringorgan und das Anbringelement aufeinander abgestimmt. Das Anbringorgan und das Anbringelement sind vorteilhafterweise als Gewindemittel, beispielsweise als ein Gewinde vorhanden. Denkbar ist auch, dass das Anbringorgan und das Anbringelement als ein Schnellverschlusssystem ausgebildet sind, z.B. in Form eines Bajonettverschlusses. Beispielsweise ist ein Gehäuse der verbleibenden Ultraschallmesseinheit aus Metall, z.B. aus Edelstahl ausgebildet.

Bevorzugterweise sind die röhrenförmige Hülse und das elastische Trägerelement miteinander verklebt. Beispielsweise sind die röhrenförmige Hülse und das elastische Trägerelement insbesondere unlösbar miteinander verbunden. Bevorzugterweise ist das elastische Trägerelement mit der verbleibenden Ultraschallmesseinheit unlösbar verbunden, z.B. verklebt.

Ebenfalls erweist es sich von Vorteil, dass das elastische Trägerelement derart vorhanden und ausgebildet ist, dass es durch einen äußeren Druck in Richtung einem Inneren der röhrenförmigen Hülse in das Innere hinein verformbar und/oder verschiebbar ausgebildet ist, sodass der äußere Rand der röhrenförmigen Hülse und ein äußeres Ende des Trägerelements in einen bündigen Zustand bringbar sind. Hierdurch ist eine Verformung des elastischen Trägerelements und damit eine insbesondere maximale Kraft auf das elastische Trägerelement vorgebbar.

Das elastische Trägerelement erstreckt sich beispielsweise im Inneren der röhrenförmigen Hülse. Zum Beispiel ist das elastische Trägerelement zylinderförmig ausgebildet. Beispielsweise ist das elastische Trägerelement als ein Zylinder, insbesondere als ein Kreiszylindervorhanden.

Außerdem ist es von Vorteil, dass in einem Bereich des äußeren Rands der röhrenförmigen Hülse zwischen röhrenförmiger Hülse und elastischem Trägerelement ein Zwischenraum vorhanden ist. Der Zwischenraum ist beispielsweise in Form eines Hohlzylinders ausgebildet. Beispielsweise sind die röhrenförmige Hülse und das elastische Trägerelement über eine Wanddicke des Hohlzylinders im Bereich des äußeren Rands der röhrenförmigen Hülse voneinander beabstandet vorhanden. Beispielsweise umschließen die röhrenförmige Hülse und das elastische Trägerelement den Zwischenraum, insbesondere den Zwischenraum in Form eines Hohlzylinders an mindestens zwei Seiten, insbesondere an drei Seiten. Vorteilhafterweise ist das elastische Trägerelement durch einen äußeren Druck in Richtung des Inneren der röhrenförmigen Hülse in das Innere der röhrenförmigen Hülse hinein verformbar. Beispielsweise ist das elastische Trägerelement durch einen äußeren Druck in Richtung des Inneren der röhrenförmigen Hülse in Richtung des Zwischenraums in das Innere der röhrenförmigen Hülse, insbesondere in den Zwischenraum, hinein verformbar, komprimierbar und/oder verschiebbar ausgebildet. Hierdurch sind der äußere Rand der röhrenförmigen Hülse und ein äußeres Ende des elastischen Trägerelements in einen bündigen Zustand bringbar.

Vorteilhafterweise ist das elastische Trägerelement, insbesondere der über den äußeren Rand der röhrenförmigen Hülse überstehende Teilbereich des elastischen Trägerelements durch den äußeren Druck insbesondere vollständig in den Zwischenraum hinein verformbar oder verschiebbar. Bevorzugterweise füllt das elastische Trägerelement im verformten Zustand den Zwischenraum vollständig aus. Hierdurch ist eine kontrollierte Auflage oder eine kontrollierte Anlage der Ultraschallmesseinheit an eine zu messende Oberfläche gewährleistet. Vorteilhafterweise ist hierdurch eine maximale Kraft definierbar, welche bei einer Antastung einer zu messenden Oberfläche auf das elastische Trägerelement einwirkt. Vorteilhafterweise ist der äußere Druck eine Antastkraft, welche bei der Antastung der zu messenden Oberfläche auf das elastische Trägerelement einwirkt. Bevorzugterweise ist das elastische Trägerelement in einer Weise an der röhrenförmigen Hülse vorhanden, dass bei einem Antastvorgang einer zu messenden Oberfläche der äußere Rand der röhrenförmigen Hülse in insbesondere unmittelbare Anlage mit der zu messenden Oberfläche kommt. Beispielsweise umfasst der Rand der röhrenförmigen Hülse eine Anlagefläche zur Anlage an eine zu messende Oberfläche. Vorteilhafterweise ist das elastische Trägerelement in einer Weise an der röhrenförmigen Hülse vorhanden, dass durch einen Antastvorgang an eine zu messenden Oberfläche das elastische Trägerelement in einer Weise verformt wird, dass der äußere Rand der röhrenförmigen Hülse in insbesondere unmittelbare Anlage mit der zu messenden Oberfläche kommt. Beispielsweise ist das elastische Trägerelement in einer Weise an der röhrenförmigen Hülse vorhanden, dass durch einen Antastvorgang an eine zu messenden Oberfläche sowohl das elastische Trägerelement als auch der äußere Rand der röhrenförmigen Hülse in insbesondere unmittelbare Anlage mit der zu messenden Oberfläche kommen.

Das elastische Trägerelement besitzt vorteilhafterweise einen Durchmesser zwischen 2mm und 50mm, zwischen 4mm und 30mm oder zwischen 6mm und 12mm. Insbesondere besitzt das elastische Trägerelement einen Durchmesser von beispielsweise 2mm, 3mm, 5mm, 7mm, 10mm, 14mm, 15mm, 16mm, 20mm, 25mm, 35mm, 40mm, 45mm oder insbesondere 8mm. Das elastische Trägerelement ist beispielsweise zwischen 2mm und 40mm lang. Beispielsweise ist das Trägerelement 2mm, 3mm, 4mm, 5mm, 6mm, 7mm, 8mm, 9mm, 10mm, 11mm oder 12mm lang.

Vorteilhafterweise ist das elastische Trägerelement länger ausgebildet, als eine Länge der Ultraschall-Vorlaufstrecke des elastischen Trägerelements während einer Ultraschall-Messung. Bevorzugterweise ist das elastische Trägerelement während einer Ultraschall-Messung in einem verformten Zustand, z.B. in einem komprimierten Zustand vorhanden. Der verformte Zustand oder der komprimierte Zustand ist vorteilhafterweise ein Zwischenzustand des elastischen Trägerelements. Beispielsweise ist das elastische Trägerelement ausgebildet, sich vom Zwischenzustand wieder in den Grundzustand zurück zu verformen.

Die Ultraschall-Vorlaufstrecke erstreckt sich vorteilhafterweise vom äußeren Rand der röhrenförmigen Hülse, insbesondere von der Anlagefläche des äußeren Rands, bis zu einer Kontaktfläche eines Ultraschallerzeugungselements. Vorteilhafterweise beträgt die Länge einer Ultraschall-Vorlaufstrecke des elastischen Trägerelements zwischen 2mm und 40mm. Beispielsweise beträgt die Ultraschall-Vorlaufstrecke 11,7mm. Vorteilhafterweise ist eine Länge der Ultraschall-Vorlaufstrecke und damit auch eine Länge des elastischen Trägerelements abhängig von einer zu vermessenden Schicht- oder Materialdicke.

In einem Grundzustand des elastischen Trägerelements ist eine äußere Stirnseite des elastischen Trägerelements vom äußeren Rand der röhrenförmigen Hülse, insbesondere von der Anlagefläche der röhrenförmigen Hülse, in einem Bereich von größer 0mm bis 5mm beabstandet. Vorteilhafterweise ist die äußere Stirnseite des elastischen Trägerelements vom äußeren Rand im Grundzustand in einem Bereich von größer 0mm bis 3mm oder größer 0mm bis 1,5mm beabstandet vorhanden. Beispielsweise ist die Stirnseite des elastischen Trägerelements vom äußeren Rand 0,05mm, 0,1mm, 0,2mm, 0,3mm, 0,4mm, 0,5mm, 0,6mm, 0,7mm, 0,8mm, 0,9mm, insbesondere 1mm beabstandet. Ein Abstand der äußere Stirnseite des elastischen Trägerelements vom äußeren Rand der röhrenförmigen Hülse, insbesondere von der Anlagefläche des äußeren Rands der röhrenförmigen Hülse, ist insbesondere in Längserstreckung der röhrenförmigen Hülse zu sehen. Beispielsweise ist der Abstand in Richtung einer Symmetrieachse des elastischen Trägerelements und/oder der röhrenförmigen Hülse zu sehen. Denkbar ist jedoch auch, dass der Abstand 0mm beträgt und die äußere Stirnseite des elastischen Trägerelements insbesondere zumindest annähernd bündig mit dem äußeren Rand der röhrenförmigen Hülse, beispielsweise mit der Anlagefläche des äußeren Rands, vorhanden ist.

Der Grundzustand des elastischen Trägerelements ist vorteilhafterweise der Zustand, bei welchem auf die äußere Stirnseite des elastischen Trägerelements nicht eingewirkt ist, insbesondere nicht durch eine äußere Kraft. Bevorzugterweise ist die äußere Stirnseite des elastischen Trägerelements eine Stirnseitenfläche, mittels welcher eine zu messende Oberfläche durch das elastische Trägerelement kontaktierbar ist. Die äußere Stirnseite des elastischen Trägerelements ist beispielsweise kreisscheibenartig vorhanden. Vorteilhafterweise bildet die äußere Stirnseite des elastischen Trägerelements eine Zylinderstirnseite des als Zylinder ausgebildeten elastischen Trägerelements.

Auch erweist es sich von Vorteil, dass die Ultraschallmesseinheit dazu ausgebildet ist, auswechselbar oder austauschbar am Messinstrument anordenbar zu sein. Hierdurch ist das Messinstrument beispielsweise auf eine zu messende Schichtdicke oder Materialdicke auslegbar. Beispielsweise gibt es verschiedene Ultraschallmesseinheiten, welche sich insbesondere ausschließlich in einer Länge der Ultraschall-Vorlaufstrecke, einer Länge der Verzögerungsstrecke oder einer Länge der Delay-Line unterscheiden. Vorteilhafterweise unterscheiden sich die verschiedenen Ultraschallmesseinheiten insbesondere in der Länge des elastischen Trägerelements.

Weiter wird vorgeschlagen, dass ein Ultraschallerzeugungselement der Ultraschallmesseinheit im Inneren der röhrenförmigen Hülse ausgebildet ist. Beispielsweise ist das Ultraschallerzeugungselement in einem Bereich um den Verbindungsrand der röhrenförmigen Hülse vorhanden. Bevorzugterweise umfasst die Ultraschallmesseinheit ein Ultraschallerzeugungselement. Vorteilhafterweise umfasst das Ultraschallerzeugungselement ein Piezoelement. Bevorzugterweise erzeugt das Ultraschallerzeugungselement Schallwellen im Ultraschallbereich. Die Schallwellen sind vorteilhafterweise als Longitudinalwellen im Ultraschallfrequenzbereich vorhanden.

Auch ist es von Vorteil, dass ein Ultraschalldetektionselement der Ultraschallmesseinheit im Inneren der röhrenförmigen Hülse ausgebildet ist.

Vorteilhafterweise ist das Ultraschallerzeugungselement als ein Transceiver vorhanden. Beispielsweise ist der Transceiver dazu ausgebildet, sowohl Schallwellen auszusenden oder zu generieren, als auch Schallwellen zu empfangen oder zu detektieren. Eine Schallerzeugungsfrequenz des Ultraschallerzeugungselement liegt vorteilhafterweise in einem Bereich um 500Hz. Beispielsweise ist die Schallerzeugungsfrequenz,des Ultraschallerzeugungselement 500Hz. Beispielsweise sind das Ultraschalldetektionselement und das Ultraschallerzeugungselement integral vorhanden.

Bevorzugterweise ist das Ultraschallerzeugungselement und/oder das Ultraschalldetektionselement unmittelbar mit dem elastischen Trägerelement verbunden. Beispielsweise ist das Ultraschallerzeugungselement und/oder das Ultraschalldetektionselement mit dem elastischen Trägerelement verklebt. Vorteilhafterweise ist das Ultraschallerzeugungselement und/oder das Ultraschalldetektionselement an einer der äußere Stirnseite des elastischen Trägerelements gegenüberliegenden und beabstandeten inneren Stirnseite des elastischen Trägerelements vorhanden. Vorteilhafterweise ist die innere Stirnseite des elastischen Trägerelements bündig, insbesondere zumindest annährend bündig mit dem Verbindungsrand der röhrenförmigen Hülse angeordnet. Beispielsweise ist das elastische Trägerelement über das Ultraschallerzeugungselement mit der verbleibenden Ultraschallmesseinheit insbesondere unlösbar verbunden, z.B. verklebt.

Bevorzugterweise sind das Ultraschallerzeugungselement und/oder das Ultraschalldetektionselement scheibenartig ausgebildet, beispielsweise als eine Kreisscheibe. Bevorzugterweise ist eine Dimension des elastischen Trägerelements auf eine Dimension des Ultraschallerzeugungselements und/oder des Ultraschalldetektionselements abgestimmt vorhanden. Vorteilhafterweise entspricht ein Durchmesser des elastischen Trägerelements 1 mal bis 3 mal dem Durchmesser des scheibenartigen Ultraschallerzeugungselements und/oder des scheibenartigen Ultraschalldetektionselements. Beispielsweise ist das Verhältnis des Durchmessers des elastischen Trägerelements zum Durchmesser des scheibenartigen Ultraschallerzeugungselements und/oder des scheibenartigen Ultraschalldetektionselements 1:1 bis 3:1.

Auch erweist es sich von Vorteil, dass die Ultraschallmesseinheit ein Kontaktierungsorgan zur elektrischen Kontaktierung eines Kontaktierungselements des Messinstruments aufweist. Beispielsweise sind das Kontaktierungsorgan und das Kontaktierungselement komplementär vorhanden. Beispielsweise sind das Kontaktierungsorgan und das Kontaktierungselement als eine Steckverbindung ausgebildet. Die Steckverbindung ist z.B. als eine Lemo-Steckverbindung vorhanden. Vorteilhafterweise ist das Kontaktierungsorgan mit dem Ultraschallerzeugungselement und/oder dem Ultraschalldetektionselement elektrisch leitend verbunden. Hierdurch ist zum einen die Ultraschallmesseinheit auswechselbar ausgebildet und zum anderen ist hierdurch das Ultraschallerzeugungselement und/oder das Ultraschalldetektionselement mit einer Kontrolleinheit des Messinstruments verbindbar.

Vorteilhafterweise ist eine Kontrolleinheit zur Steuerung der Ultraschallmesseinheit am Messinstrument ausgebildet. Vorteilhafterweise ist die Kontrolleinheit dazu ausgebildet, das Ultraschallerzeugungselement und/oder das Ultraschalldetektionselement anzusteuern und zu regeln. Beispielsweise umfasst die Kontrolleinheit eine Rechenintelligenz um auf Basis der erzeugten und der empfangenen Ultraschallsignale eine Materialdicke oder eine Schichtdicke eines Messobjekts zu bestimmen.

Erfindungsgemäß weist das Messinstrument eine taktile Sensoreinheit auf, wobei mittels der Sensoreinheit ein Antastereignis zwischen dem Messinstrument, insbesondere der Ultraschallmesseinheit, und einer zu messenden Oberfläche detektierbar ist. Hierdurch ist ein Antastzustand des Messinstruments bestimmbar, bei welchem eine Ultraschallmessung mit der Ultraschallmesseinheit durchführbar ist.

Beispielsweise umfasst die Sensoreinheit einen optisch, kapazitiv und/oder induktiv arbeitenden Sensor, z.B. einen Schalt-Sensor. Beispielsweise umfasst die Sensoreinheit einen Weg- und/oder Kraftsensor. Vorteilhafterweise ist die Sensoreinheit als ein Schalter oder als ein Taster ausgebildet. Denkbar ist, dass die Sensoreinheit einen Abstand zwischen einer Referenzfläche des Messinstruments und einer zu messenden Oberfläche detektiert oder ermittelt und nach unterschreiten eines definierten Abstandswerts ein Triggersignal ausgibt, und damit das Antastereignis detektiert.

Außerdem ist es von Vorteil, dass das Messinstrument derart ausgebildet ist, dass eine insbesondere einzige Relativbewegung der Ultraschallmesseinheit zum Messinstrument das Antastereignis auslöst.

Erfindungsgemäß ist die röhrenförmige Hülse beweglich gelagert am Messinstrument angeordnet. Insbesondere ist die röhrenförmige Hülse linearbeweglich vorhanden. Vorteilhafterweise umfasst das Messinstrument ein Rückstellelement, z.B. in Form einer Feder. Beispielsweise ist die Ultraschallmesseinheit über das Rückstellelement beweglich gelagert an der Messvorrichtung. Erfindungsgemäß ist das Messinstrument derart ausgebildet, dass eine Relativbewegung der röhrenförmigen Hülse zum Messinstrument das Antastereignis auslöst. Beispielsweise löst eine einzige Relativbewegung der röhrenförmigen Hülse zum Messinstrument das Antastereignis aus. Vorteilhafterweise ist das Messinstrument derart vorhanden, dass bei einem Antastvorgang einer zu messenden Oberfläche zunächst das elastische Trägerelement mit der zu messenden Oberfläche in insbesondere unmittelbaren Kontakt kommt und durch den Antastvorgang aufgrund des Gegendrucks der zu messenden Oberfläche verformt wird, sodass beim weiteren Antastvorgang der äußere Rand der röhrenförmigen Hülse in insbesondere unmittelbaren Kontakt mit der zu messenden Oberfläche kommt und beim weiteren Antastvorgang die röhrenförmige Hülse zusammen mit dem elastischen Trägerelement in Richtung Messinstrument gegen eine Kraft des Rückstellelements, relativ zum Messinstrument bewegt wird. Beispielsweise ist das Messinstrument in einer Weise ausgebildet, dass durch die Relativbewegung der röhrenförmigen Hülse in Richtung Messinstrument durch die Sensoreinheit eine Schalt- oder Tastsignal auslösbar ist.

Weiter von Vorteil ist, dass die Sensoreinheit eine Lichtschranke aufweist. Vorteilhafterweise umfasst die Lichtschranke ein Lichterzeugungsorgan und ein Lichtdetektionsorgan und eine elektronisches Kontrollmodul. Das Lichterzeugungsorgan ist beispielsweise als eine Diode ausgebildet. Das Lichtdetektionsorgan ist zum Beispiel als eine Photodiode ausgebildet. Beispielsweise wird durch den Antastvorgang und der Relativbewegung der röhrenförmigen Hülse in Richtung Messinstrument ein Schaltelement des Messinstruments in Richtung Lichtschranke bewegt, sodass ein Triggersignal aufgelöst wird, welches ein Antastereignis signalisiert.

In einer vorteilhaften Ausführungsform ist das Messinstrument dazu ausgebildet, aufgrund der Detektion eines Antastereignisses, eine Ultraschallmessung der Ultraschallmesseinheit zu starten. Vorteilhafterweise erzeugt das Messinstrument aufgrund der Detektion eines Antastereignisses ein Triggersignal. Beispielsweise ist das Messinstrument dazu ausgebildet, das Triggersignal an die Maschine, an welcher das Messinstrument anordenbar ist, weiterzuleiten, sodass eine Achsbewegung der Maschine und damit eine Bewegung des Messinstruments anhaltbar ist.

Beispielsweise ist das Messinstrument dazu ausgebildet, zeitlich nach einem Antastereignis, z.B. in einem vorgegebenen zeitlichen Abstand, eine Ultraschallmessung der Ultraschallmesseinheit zu starten. Hierdurch ist die Bestimmung einer Materialstärke oder Materialdicke abhängig von einer Positionsbestimmung des Messinstruments realisiert, wodurch die Materialstärke mit einer Messposition am zu messenden Objekt verknüpfbar ist. Vorteilhafterweise ist mit der am Messinstrument angeordneten Ultraschallmesseinheit genau dann eine Ultraschallmessung eines zu messenden Objekts realisierbar, wenn die Ultraschallmesseinheit das zu messende Objekt insbesondere unmittelbar kontaktiert.

Eine vorteilhafte Ausführungsform der Erfindung ist eine Messvorrichtung umfassend ein Messinstrument nach einer der vorhergehend genannten Ausführungen und umfassend eine Sende- und Empfangseinheit zur Steuerung des Messinstruments, wobei die Messvorrichtung an einer Maschine anordenbar ausgebildet ist.

Die Sende- und Empfangseinheit ist beispielsweise als ein Receiver vorhanden. Beispielsweise kommunizieren die Sende- und Empfangseinheit und das Messinstrument über einen drahtlosen Kommunikationskanal. Beispielsweise kommunizieren die Sende- und Empfangseinheit und das Messinstrument mittels optischer Signale und/oder mittels Funksignalen. Die optischen Signale sind beispielsweise Infrarotsignale. Die Funksignale sind beispielsweise Bluetooth-Signale. Weiter wird vorgeschlagen, dass die Sende- und Empfangseinheit und das Messinstrument mittels einer Funkverbindung miteinander kommunizieren. Bevorzugterweise kommunizieren die Sende- und Empfangseinheit und das Messinstrument mittels einer WLAN-Schnittstelle, einer Bluetooth-Schnittstelle und/oder einer Mobilfunkschnittstelle. Die Mobilfunkschnittstelle ist beispielsweise als eine LTE-Schnittstelle vorhanden.

In einer bevorzugten Ausführungsform der Messvorrichtung weist das Messinstrument eine Schnittstelle auf, um das Messinstrument mit der Maschine, insbesondere der Werkzeugmaschine und/oder der Messmaschine zu verbinden, wobei das Messinstrument dazu ausgebildet ist, einen Ultraschallmesswert an eine Steuereinheit der Maschine, insbesondere an eine Steuereinheit der Werkzeugmaschine und/oder an eine Steuereinheit der Messmaschine insbesondere mittels der Schnittstelle zu übermitteln.

Vorteilhafterweise ist die Sende- und Empfangseinheit dazu ausgebildet, mit der Maschine verbindbar zu sein. Beispielsweise umfasst die Sende- und Empfangseinheit eine Schnittstelle.

Die Schnittstelle ist vorteilhafterweise als eine serielle Schnittstelle ausgebildet. Vorteilhafterweise basiert die Kommunikation zwischen Sende- und Empfangseinheit und der Werkzeugmaschine und/oder der Messmaschine auf einem synchronen, seriellen Protokoll. Denkbar ist auch, dass die Schnittstelle als eine Standard-Schnittstelle, z.B. als ein Standard Datenbus, ausgebildet ist. Beispielsweise ist die Schnittstelle als eine Profinet-Schnittstelle, als eine EnDat-Schnittstelle oder als ein SPI (Serial Peripheral Interface) vorhanden. Von Vorteil erweist sich auch, dass die Schnittstelle eine drahtgebundene Schnittstelle ist. Hierdurch ist ein vergleichsweise sicherer Übertragungsweg realisiert. Ebenfalls erweist es sich von Vorteil, dass die Schnittstelle eine Signalleitung für eine Stromversorgung der Steuerungseinheit und eine Signalleitung für eine Messsignalübertragung aufweist.

Außerdem ist es von Vorteil, dass die Schnittstelle eine Signalleitung zur seriellen Datenkommunikation mit der Werkzeugmaschine und/oder der Messmaschine besitzt. Die Schnittstelle ist beispielsweise als eine serielle und/oder parallele Schnittstelle ausgebildet. Vorteilhafterweise ist die Schnittstelle in der Form einer USB-Schnittstelle vorhanden.

Eine weitere vorteilhafte Ausbildung der Erfindung ist eine Maschine, insbesondere eine Werkzeugmaschine oder eine Messmaschine mit einem Messinstrument nach einer der vorhergehend genannten Ausführungen und/oder eine Messvorrichtung nach einer der vorhergehend genannten Ausführungsformen.

### Beschreibung von Ausführungsbeispielen

Ausführungsbeispiele werden anhand der nachstehenden schematischen Zeichnungen unter Angabe von weiteren Einzelheiten und Vorteilen näher erläutert.

Es zeigen:
- Figur 1: eine schematische Darstellung einer Maschine mit einer Messvorrichtung,
- Figur 2: eine schematische Darstellung in einer weiteren Ausbildungsvariante einer Messvorrichtung,
- Figur 3: eine schematische Querschnittdarstellung einer weiteren Ausbildungsvariante einer Messvorrichtung in einem Grundzustand, vor einer Antastung einer zu messenden Oberfläche und
- Figur 4: eine schematische Querschnittdarstellung der Messvorrichtung gemäß Figur 3 in einem Zwischenzustand, während der Antastung der zu messenden Oberfläche.

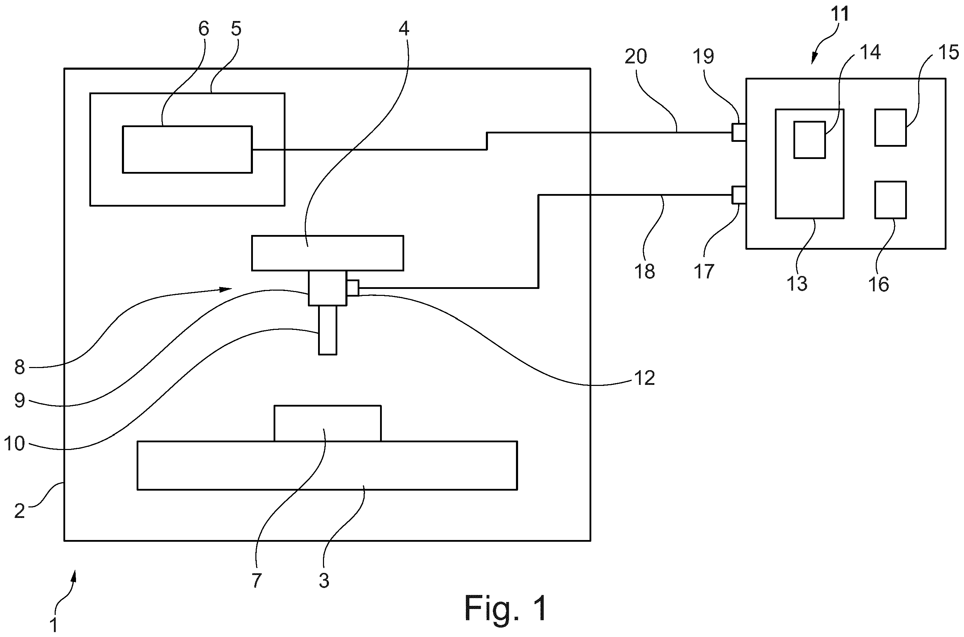

Figur 1 zeigt eine Maschine 1 mit einer schematisch dargestellten Umhausung 2, einem Maschinentisch 3, einer Bewegungsachse 4 und einer Steuereinheit 5. Die Maschine 1 umfasst beispielsweise ein Speichermodul 6, welches z.B. an der Steuereinheit 5 vorhanden ist. Auf dem Maschinentisch 3 ist beispielhaft ein Messobjekt 7 angeordnet.

An der Maschine 1 ist vorteilhafterweise eine Messvorrichtung 8 angeordnet. Die Messvorrichtung 8 umfasst ein Messinstrument 9 und eine Ultraschallmesseinheit 10. Des Weiteren kann die Messvorrichtung 8 eine Sende- und Empfangseinheit 11 aufweisen. Die Sende- und Empfangseinheit 11 weist beispielsweise eine Kontrolleinheit 13 mit einem Steuerungsmodul 14 auf. Das Messsystem 8 kann des Weiteren eine Speichereinheit 15 und einen Zeitgeber 16 umfassen. In der Ausführungsvariante gemäß Figur 1 ist das Messinstrument 8 beispielhaft über die Schnittstellen 12, 17 mittels einer Signalleitung 18 mit der Sende- und Empfangseinheit 11 gekoppelt. Die Signalleitung 18 ist beispielsweise als eine kabellose Signalleitung vorhanden. Die Signalleitung 18 ist beispielsweise als eine Funkverbindung oder ein Funkkanal ausgebildet. Denkbar ist auch, dass die Signalleitung 18 als eine optische Verbindung, z.B. als ein optischer Leitungskanal ausgebildet ist. Außerdem ist die Sende- und Empfangseinheit 11 mittels der Schnittstelle 19 mit der Maschine 1, insbesondere der Steuereinheit 5 der Maschine 1 über eine weitere Signalleitung 20 verbunden. Denkbar ist weiter, dass die Schnittstelle 19 als eine Standardschnittstelle ausgebildet ist, z.B. als eine USB- oder Netzwerkschnittstelle.

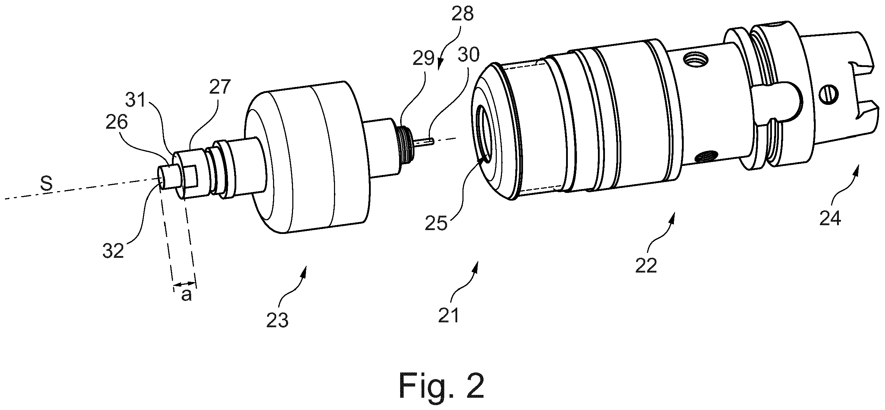

In Figur 2 ist eine weitere Variante einer Messvorrichtung 21 gezeigt. Die Messvorrichtung 21 umfasst ein Messinstrument 22 und eine Ultraschallmesseinheit 23. DasMessinstrument 22 umfasst vorteilhafterweise ein Anbringmittel 24, um das Messinstrument 22 mit einer Bewegungsachse einer Maschine (nicht gezeigt), insbesondere einer Werkzeugaufnahme der Maschine, zu verbinden. Am Messinstrument 22 ist weiterhin ein Anbringelement 25 vorhanden, welches beispielhaft als ein Innengewinde ausgebildet ist, um die Ultraschallmesseinheit 23 anzuordnen.

Die Ultraschallmesseinheit 23 umfasst ein elastisches Trägerelement 26 und eine röhrenförmige Hülse 27. An einem ersten Ende 28 der röhrenförmigen Hülse 27 ist ein Anbringorgan 29 ausgebildet, um die Ultraschallmesseinheit 23 mit dem Messinstrument 22 zu verbinden. Das Anbringorgan 29 ist beispielsweise als ein Außengewinde ausgebildet, um die Ultraschallmesseinheit 23 an das Messinstrument 22 anzuordnen. Vorteilhafterweise ist am ersten Ende 28 außerdem ein elektrischer Kontakt 30 ausgebildet, um die Ultraschallmesseinheit 23 elektrisch leitend mit dem Messinstrument 22 zu verbinden.

Das elastische Trägerelement 26 steht über einen äußeren Rand 31 der röhrenförmigen Hülse 27 hervor. Vorteilhafterweise ist eine äußere Stirnseite 32 des elastischen Trägerelements 26 in einem Abstand a vom äußeren Rand 31 beabstandet vorhanden. Wobei der Abstand a entlang einer Symmetrieachse oder Rotationsachse S des elastischen Trägerelements 26 zu sehen ist. In Figur 2 ist der Abstand a zwischen äußerer Stirnseite 32 zu äußerem Rand 31 im Verhältnis zur restlichen Messvorrichtung 21 zum besseren Verständnis überzeichnet dargestellt.

Das elastische Trägerelement 26 ist vorteilhafterweise zylindrisch ausgebildet. Hierdurch ist es vergleichsweise einfach herstellbar.

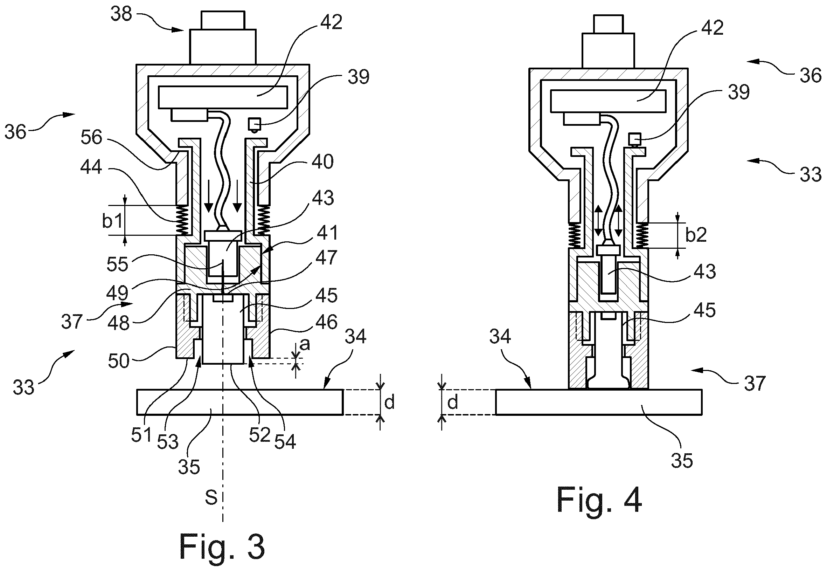

In den Figuren 3 und 4 ist eine weitere Variante einer Messvorrichtung 33 dargestellt. In Figur 3 ist die Messvorrichtung 33 vor einer Antastung einer Oberfläche 34 eines Messobjekts 35 gezeigt und in Figur 4 ist die Messvorrichtung 33 bei einer Antastung der Oberfläche 34 des Messobjekts 35 dargestellt.

Die Messvorrichtung 33 umfasst ein Messinstrument 36 und eine Ultraschallmesseinheit 37.

Das Messinstrument 36 umfasst Anbringmittel 38 zur Montage des Messinstruments 36 an eine Werkzeugaufnahme einer Maschine. Weiter umfasst das Messinstrument 36 eine Sensoreinheit in Form eines Schalters 39', ein Schaltelement 40, ein Anbringelement 41, eine Kontrolleinheit 42, ein elektrisches Verbindungsmittel in Form eines Steckers 43, sowie ein Rückstellelement in Form eines Federelements 44.

Die Ultraschallmesseinheit 37 umfasst ein elastisches Trägerelement 45, eine röhrenförmige Hülse 46, ein Ultraschallerzeugungselement in Form eines Piezos 47, sowie ein Gehäuse 48 mit einem Anbringorgan 49.

Die Hülse 46 besitzt einen äußeren Rand 50 mit einer Antastfläche 51. Das elastische Trägerelement 45 besitzt eine Stirnseite 52, wobei die Stirnseite 52 um einen Abstand a über den äußeren Rand 50 der Hülse 46 auseinem Inneren 53 der Hülse 46 hervorsteht.

Zwischen der Hülse 46 und dem elastischen Trägerelement 45 ist vorteilhafterweise ein Zwischenraum 54 vorhanden, sodass das elastische Trägerelement 45 bei einem Antastvorgang (siehe Figur 4) in das Innere 53 der Hülse 46, z.B. in den Zwischenraum 54 verformbar ist.

Im angeordneten Zustand der Ultraschallmesseinheit 37 am Messinstrument 36 ist die Ultraschallmesseinheit 37 mittels eines elektrischen Kontakts 55 über den Stecker 43 elektrisch leitend mit dem Messinstrument 36 verbunden. Vorteilhafterweise ist das elastische Trägerelement 45 und der Piezo 47 unlösbar mit dem Gehäuse 48 verbunden, z.B. verklebt.

Im Grundzustand der Messvorrichtung 33 ist das Federelement 44 in einem entspannten Zustand vorhanden und umfasst eine Länge b1. Die Ultraschallmesseinheit 37, insbesondere der äußere Rand 50 und die Stirnseite 52, sind im Grundzustand der Messvorrichtung 33 maximal weit von einer Anlagefläche 56 des Messinstruments 36 beabstandet vorhanden.

Um eine Schicht- oder Materialdicke d des Messobjekts 35 zu messen, wird die Messvorrichtung 33 an die Oberfläche 34 des Messobjekts 35 heranbewegt, sodass das elastische Trägerelement 45 mit der Stirnseite 52 in unmittelbare Anlage mit der Oberfläche 34 des Messobjekts 35 kommt und dabei durch die Antastkraft in das Innere 53 der Hülse 46 hinein verformt wird (siehe Figur 4). Hierdurch gelangt der äußere Rand 50 mit-seiner Antastfläche 51 zu unmittelbaren Anlage an die Oberfläche 34 des Messobjekts 35. Vorteilhafterweise sind in diesem Zustand die Stirnseite 52 und die Antastfläche 51, abhängig von der Oberflächenbeschaffenheit des Messobjekts 35 bündig vorhanden. Der Abstand a ist in diesem Zustand vorteilhafterweise 0.

Durch eine weitere Bewegung der Messvorrichtung 33 in Richtung Messobjekt 35 wird die Hülse 46 und damit das Gehäuse 48 und das elastische Trägerelement 45 relativ zu Messinstrument 36 in Richtung Messinstrument 36 bewegt. Durch diese Bewegung wird das Federelement 44 gespannt und das Schaltelement 40 in Richtung Schalter 39 bewegt, bis das Schaltelement 40 mit dem Schalter 39 interagiert, diesen z.B. schaltet und hierdurch ein Triggersignal ausgelöst wird. In diesem Zustand der Messvorrichtung 33 ist das Federelement 44 in einem gespannten Zustand vorhanden und umfasst eine Länge b2, welche kürzer ist, als die Länge b1. Das Messinstrument 36, insbesondere die Kontrolleinheit 42, ist vorteilhafterweise weiter dazu ausgebildet, das Triggersignal an eine Maschine, an welcher die Messvorrichtung 33 angeordnet ist zu übermitteln, wodurch eine Bewegung der Messvorrichtung 33 in Richtung des Messobjekts 35 angehalten wird und beispielsweise eine Antastkoordinate bezogen auf das Messobjekt 35 durch die Messvorrichtung 33 ermittelt wird. Außerdem ist die Messvorrichtung 33 dazu ausgebildet, anschließend eine Ultraschallmessung vorzunehmen, um die Schicht- oder Materialdicke d des Messobjekts 35 zu bestimmen. Nach der Ultraschallmessung wird die Messvorrichtung 33 vom Messobjekt 35 durch die Maschine 1 wegbewegt und das Federelement 44, sowie das elastische Trägerelement 45 entspannen sich wieder in den Grundzustand gemäß Figur 3.

### Bezugszeichenliste

| | | | |
|---|---|---|---|
| 1 | Maschine | 29 | Anbringorgan |
| 2 | Umhausung | 30 | Kontakt |
| 3 | Maschinentisch | 31 | Rand |
| 4 | Bewegungsachse | 32 | Stirnseite |
| 5 | Steuereinheit | 33 | Messvorrichtung |
| 6 | Speichermodul | 34 | Oberfläche |
| 7 | Messobjekt | 35 | Messobjekt |
| 8 | Messvorrichtung | 36 | Messinstrument |
| 9 | Messinstrument | 37 | Ultraschallmesseinheit |
| 10 | Ultraschallmesseinheit | 38 | Anbringmittel |
| 11 | Sende- und Empfangseinheit | 39 | Schalter |
| | | 40 | Schaltelement |
| 12 | Schnittstelle | 41 | Anbringelement |
| 13 | Kontrolleinheit | 42 | Kontrolleinheit |
| 14 | Steuerungsmodul | 43 | Stecker |
| 15 | Speichereinheit | 44 | Federelement |
| 16 | Zeitgeber | 45 | Trägerelement |
| 17 | Schnittstelle | 46 | Hülse |
| 18 | Signalleitung | 47 | Piezo |
| 19 | Schnittstelle | 48 | Gehäuse |
| 20 | Signalleitung | 49 | Anbringorgan |
| 21 | Messvorrichtung | 50 | Rand |
| 22 | Messinstrument | 51 | Antastfläche |
| 23 | Ultraschallmesseinheit | 52 | Stirnseite |
| 24 | Anbringmittel | 53 | Inneres |
| 25 | Anbringelement | 54 | Zwischenraum. |
| 26 | Trägerelement | 55 | Kontakt |
| 27 | Hülse | 56 | Anlagefläche |
| 28 | Ende | | |

## Patentansprüche

1. Messinstrument (9, 22, 36) mit einer Ultraschallmesseinheit (10, 23, 37), wobei das Messinstrument (9, 22, 36) ausgebildet ist, an eine Bewegungsachse (4) einer Maschine (1) angeordnet werden zu können, wobei im angeordneten Zustand der Ultraschallmesseinheit (10, 23, 37) am Messinstrument (9, 22, 36) mittels der Ultraschallmesseinheit (10, 23, 37) eine Ultraschallmessung durchführbar ist, wobei die Ultraschallmesseinheit (10, 23, 37) eine röhrenförmige Hülse (27, 46) und ein elastisches Trägerelement (26, 45) umfasst, wobei die röhrenförmige Hülse (27, 46) das elastische Trägerelement (26, 45) umschließt, wobei das elastische Trägerelement (26, 45) aus einem Ultraschallwellen leitenden Material besteht, wobei an einem ersten Ende der röhrenförmigen Hülse (27, 46) das elastische Trägerelement (26, 45) über einen äußeren Rand (31, 50) der röhrenförmigen Hülse (27, 46) hervorsteht, wobei die röhrenförmige Hülse (27, 46) und das elastische Trägerelement (26, 45) dazu vorgesehen sind, bei einem Antastvorgang des Messinstruments (9, 22, 36), die zu messende Oberfläche (34) unmittelbar zu kontaktieren, wobei das Messinstrument (9, 22, 36) eine taktile Sensoreinheit (39, 40) aufweist, wobei mittels der taktilen Sensoreinheit (39, 40) ein Antastereignis zwischen dem Messinstrument (9, 22, 36) und einer zu messenden Oberfläche detektierbar ist, wobei die röhrenförmige Hülse (27, 46) beweglich gelagert am Messinstrument (9, 22, 36) angeordnet ist, wobei eine Relativbewegung der röhrenförmigen Hülse (27, 46) zum Messinstrument (9, 22, 36) das Antastereignis auslöst.

2. Messinstrument (9, 22, 36) nach dem vorangegangenen Anspruch 1, **dadurch gekennzeichnet, dass** das Messinstrument (9, 22, 36) aufgrund der Detektion eines Antastereignis ein Triggersignal erzeugt, wobei das Messinstrument (9, 22, 36) dazu ausgebildet ist, im angeordneten Zustand an der Maschine (1) das Triggersignal an die Maschine (1) weiterzuleiten, sodass ein Achsbewegung der Maschine (1) und damit eine Bewegung des Messinstruments (9, 22, 36) anhaltbar ist.

3. Messinstrument (9, 22, 36) nach einem der vorangegangenen Ansprüche, **dadurch gekennzeichnet, dass** die röhrenförmige Hülse (27, 46) aus einem Kunststoffmaterial ausgebildet ist.

4. Messinstrument (9, 22, 36) nach einem der vorangegangenen Ansprüche, **dadurch gekennzeichnet, dass** die röhrenförmige Hülse (27, 46) das elastische Trägerelement (26, 45) formschlüssig umschließt.

5. Messinstrument (9, 22, 36) nach einem der vorangegangenen Ansprüche, **dadurch gekennzeichnet, dass** das elastische Trägerelement (26, 45) derart vorhanden und ausgebildet ist, dass es durch einen äußeren Druck in Richtung einem Inneren (53) der röhrenförmigen Hülse (27, 46) in das Innere (53) hinein verformbar und/oder verschiebbar ausgebildet ist, sodass der äußere Rand (31, 50) der röhrenförmigen Hülse (27, 46) und ein äußeres Ende (32, 52) des Trägerelements (26, 45) in einen bündigen Zustand bringbar sind.

6. Messinstrument (9, 22, 36) nach einem der vorangegangenen Ansprüche, **dadurch gekennzeichnet, dass** in einem Bereich des äußeren Rands (31, 50) der röhrenförmigen Hülse (27, 46) zwischen röhrenförmiger Hülse (27, 46) und elastischem Trägerelement (26, 45) ein Zwischenraum (54) vorhanden ist.

7. Messinstrument (9, 22, 36) nach einem der vorangegangenen Ansprüche, **dadurch gekennzeichnet, dass** die Ultraschallmesseinheit (10, 23, 37) dazu ausgebildet ist, auswechselbar oder austauschbar am Messinstrument (9, 22, 36) anordenbar zu sein.

8. Messinstrument (9, 22, 36) nach einem der vorangegangenen Ansprüche, **dadurch gekennzeichnet, dass** ein Ultraschallerzeugungselement (47) der Ultraschallmesseinheit (10, 23, 37) im Inneren (53) der röhrenförmigen Hülse (27, 46) ausgebildet ist.

9. Messinstrument (9, 22, 36) nach einem der vorangegangenen Ansprüche, **dadurch gekennzeichnet, dass** ein Ultraschalldetektionselement (47) der Ultraschallmesseinheit (10, 23, 37) im Inneren (53) der röhrenförmigen Hülse (27, 46) ausgebildet ist.

10. Messinstrument (9, 22, 36) nach einem der vorangegangenen Ansprüche, **dadurch gekennzeichnet, dass** das Messinstrument (9, 22, 36) derart ausgebildet ist, dass eine insbesondere einzige Relativbewegung der Ultraschallmesseinheit (10, 23, 37) zum Messinstrument (9, 22, 36) das Antastereignis auslöst.

11. Messinstrument (9, 22, 36) nach einem der vorangegangenen Ansprüche, **dadurch gekennzeichnet, dass** das Messinstrument (9, 22, 36) dazu ausgebildet ist, aufgrund der Detektion eines Antastereignis, eine Ultraschallmessung der Ultraschallmesseinheit (10, 23, 37) zu starten.

12. Messinstrument (9, 22, 36) nach einem der vorangegangenen Ansprüche, **dadurch gekennzeichnet, dass** die taktile Sensoreinheit eine Lichtschranke aufweist.

13. Messvorrichtung (8, 21, 33) umfassend ein Messinstrument (9, 22, 36) nach einem der vorangegangenen Ansprüche und eine Sende- und Empfangseinheit zur Steuerung des Messinstruments (9, 22, 36), wobei die Messvorrichtung (8, 21, 33) an eine Messmaschine und/oder an eine Werkzeugmaschine anordenbar ausgebildet ist.

14. Messvorrichtung (8, 21, 33) nach dem vorangegangenen Anspruch 13, **dadurch gekennzeichnet, dass** das Messinstrument (9, 22, 36) eine Schnittstelle (12) aufweist, um das Messinstrument mit der Werkzeugmaschine und/oder der Messmaschine zu verbinden, wobei das Messinstrument (9, 22, 36) dazu ausgebildet ist, einen Ultraschallmesswert an eine Steuereinheit (5) der Werkzeugmaschine und/oder an eine Steuereinheit (5) der Messmaschine zu übermitteln.

15. Maschine (1), insbesondere Werkzeugmaschine oder Messmaschine mit einem Messinstrument (9, 22, 36) nach einem der vorangegangenen Ansprüche 1 bis 12 oder einer Messvorrichtung (8, 21, 33) nach einem der Ansprüche 13 oder 14.

## Claims

1. Measuring instrument (9, 22, 36) having an ultrasonic measuring unit (10, 23, 37), wherein the measuring instrument (9, 22, 36) is configured so that it can be arranged on a movement axle (4) of a machine (1), wherein an ultrasonic measurement can be carried out by means of the ultrasonic measuring unit (10, 23, 37) in the arranged state of the ultrasonic measuring unit (10, 23, 37) on the measuring instrument (9, 22, 36), wherein the ultrasonic measuring unit (10, 23, 37) comprises a tubular sleeve (27, 46) and a resilient support element (26, 45), wherein the tubular sleeve (27, 46) encloses the resilient support element (26, 45), wherein the resilient support element (26, 45) consists of a material that conducts ultrasound waves, wherein the resilient support element (26, 45) protrudes beyond an outer edge (31, 50) of the tubular sleeve (27, 46) at a first end of the tubular sleeve (27, 46), wherein the tubular sleeve (27, 46) and the resilient support element (26, 45) are intended to directly contact the surface (34) to be measured during a sampling process of the measuring instrument (9, 22, 36), wherein the measuring instrument (9, 22, 36) has a tactile sensor unit (39, 40), wherein a sampling event between the measuring instrument (9, 22, 36) and a surface to be measured is detectable by means of the tactile sensor unit (39, 40), wherein the tubular sleeve (27, 46) is arranged in a manner mounted movably on the measuring instrument (9, 22, 36), wherein a relative movement of the tubular sleeve (27, 46) relative to the measuring instrument (9, 22, 36) triggers the sampling event.

2. Measuring instrument (9, 22, 36) according to the preceding Claim 1, **characterized in that** the measuring instrument (9, 22, 36) generates a trigger signal because of the detection of a sampling event, the measuring instrument (9, 22, 36) being configured to forward the trigger signal to the machine (1) in the arranged state on the machine (1), so that an axle movement of the machine (1) and therefore a movement of the measuring instrument (9, 22, 36) can be stopped.

3. Measuring instrument (9, 22, 36) according to any of the preceding claims, **characterized in that** the tubular sleeve (27, 46) is formed from a plastics material.

4. Measuring instrument (9, 22, 36) according to any of the preceding claims, **characterized in that** the tubular sleeve (27, 46) interlockingly encloses the resilient support element (26, 45).

5. Measuring instrument (9, 22, 36) according to any of the preceding claims, **characterized in that** the resilient support element (26, 45) is present and configured in such a way that it is configured to be deformable and/or displaceable into the interior (53) by an external pressure in the direction of an interior (53) of the tubular sleeve (27, 46), so that the outer edge (31, 50) of the tubular sleeve (27, 46) and an outer end (32, 52) of the support element (26, 45) can be brought into a flush state.

6. Measuring instrument (9, 22, 36) according to any of the preceding claims, **characterized in that** an intermediate space (54) is present in a region of the outer edge (31, 50) of the tubular sleeve (27, 46) between the tubular sleeve (27, 46) and the resilient support element (26, 45).

7. Measuring instrument (9, 22, 36) according to any of the preceding claims, **characterized in that** the ultrasonic measuring unit (10, 23, 37) is configured to be arrangeable interchangeably or replaceably on the measuring instrument (9, 22, 36).

8. Measuring instrument (9, 22, 36) according to any of the preceding claims, **characterized in that** an ultrasound generating element (47) of the ultrasonic measuring unit (10, 23, 37) is formed in the interior (53) of the tubular sleeve (27, 46).

9. Measuring instrument (9, 22, 36) according to any of the preceding claims, **characterized in that** an ultrasound detection element (47) of the ultrasonic measuring unit (10, 23, 37) is formed in the interior (53) of the tubular sleeve (27, 46).

10. Measuring instrument (9, 22, 36) according to any of the preceding claims, **characterized in that** the measuring instrument (9, 22, 36) is configured in such a way that an in particular single relative movement of the ultrasonic measuring unit (10, 23, 37) relative to the measuring instrument (9, 22, 36) triggers the sampling event.

11. Measuring instrument (9, 22, 36) according to any of the preceding claims, **characterized in that** the measuring instrument (9, 22, 36) is configured to start an ultrasound measurement of the ultrasonic measuring unit (10, 23, 37) because of the detection of a sampling event.

12. Measuring instrument (9, 22, 36) according to any of the preceding claims, **characterized in that** the tactile sensor unit has a photoelectric barrier.

13. Measuring device (8, 21, 33) comprising a measuring instrument (9, 22, 36) according to any of the preceding claims and a transmission and reception unit for controlling the measuring instrument (9, 22, 36), the measuring device (8, 21, 33) being configured to be arrangeable on a measuring machine and/or on a machine tool.

14. Measuring device (8, 21, 33) according to the preceding Claim 13, **characterized in that** the measuring instrument (9, 22, 36) has an interface (12) in order to connect the measuring instrument to the machine tool and/or the measuring machine, the measuring instrument (9, 22, 36) being configured to transmit an ultrasound measurement value to a command unit (5) of the machine tool and/or to a command unit (5) of the measuring machine.

15. Machine (1), in particular a machine tool or measuring machine, having a measuring instrument (9, 22, 36) according to any of the preceding Claims 1 to 12 or a measuring device (8, 21, 33) according to any of Claims 13 and 14.

## Revendications

1. Instrument de mesure (9, 22, 36) comprenant une unité de mesure par ultrasons (10, 23, 37), l'instrument de mesure (9, 22, 36) étant configuré pour pouvoir être disposé au niveau d'un axe de mouvement (4) d'une machine (1), une mesure par ultrasons pouvant être effectuée au moyen de l'unité de mesure par ultrasons (10, 23, 37) dans l'état monté de l'unité de mesure par ultrasons (10, 23, 37) sur l'instrument de mesure (9, 22, 36), l'unité de mesure par ultrasons (10, 23, 37) comportant une douille tubulaire (27, 46) et un élément porteur (26, 45) élastique, la douille tubulaire (27, 46) entourant l'élément porteur (26, 45) élastique, l'élément porteur (26, 45) élastique se composant d'un matériau conduisant les ondes ultrasoniques, l'élément porteur (26, 45) élastique faisant saillie au niveau d'une première extrémité de la douille tubulaire (27, 46) au-dessus d'un bord extérieur (31, 50) de la douille tubulaire (27, 46), la douille tubulaire (27, 46) et l'élément porteur (26, 45) élastique étant conçus pour, lors d'une opération de palpage de l'instrument de mesure (9, 22, 36), entrer en contact directement avec la surface (34) à mesurer, l'instrument de mesure (9, 22, 36) possédant une unité de détection tactile (39, 40), un résultat de palpage entre l'instrument de mesure (9, 22, 36) et une surface à mesurer pouvant être détecté au moyen de l'unité de détection tactile (39, 40), la douille tubulaire (27, 46) étant disposée mobile sur l'instrument de mesure (9, 22, 36), un mouvement relatif de la douille tubulaire (27, 46) par rapport à l'instrument de mesure (9, 22, 36) déclenchant l'événement de palpage.

2. Instrument de mesure (9, 22, 36) selon la revendication 1 précédente, **caractérisé en ce que** l'instrument de mesure (9, 22, 36) génère un signal de déclenchement en raison de la détection d'un événement de palpage, l'instrument de mesure (9, 22, 36) étant configuré pour, dans l'état disposé sur la machine (1), retransmettre le signal de déclenchement à la machine (1) de sorte qu'un mouvement d'axe de la machine (1) et ainsi un mouvement de l'instrument de mesure (9, 22, 36) peuvent être stoppés.

3. Instrument de mesure (9, 22, 36) selon l'une des revendications précédentes, **caractérisé en ce que** la douille tubulaire (27, 46) est réalisée à partie d'une matière plastique.

4. Instrument de mesure (9, 22, 36) selon l'une des revendications précédentes, **caractérisé en ce que** la douille tubulaire (27, 46) entoure l'élément porteur (26, 45) élastique par complémentarité de formes.

5. Instrument de mesure (9, 22, 36) selon l'une des revendications précédentes, **caractérisé en ce que** l'élément porteur (26, 45) élastique est présent et configuré de telle sorte qu'il est configuré pour pouvoir être déformé et/ou décalé dans un intérieur (53) de la douille tubulaire (27, 46) par une pression externe en direction de l'intérieur (53), de sorte que le bord extérieur (31, 50) de la douille tubulaire (27, 46) et une extrémité extérieure (32, 52) de l'élément porteur (26, 45) peuvent être amenés dans un état affleurant.

6. Instrument de mesure (9, 22, 36) selon l'une des revendications précédentes, **caractérisé en ce qu'**un espace intermédiaire (54) est présent dans une zone du bord extérieur (31, 50) de la douille tubulaire (27, 46) entre la douille tubulaire (27, 46) et l'élément porteur (26, 45) élastique.

7. Instrument de mesure (9, 22, 36) selon l'une des revendications précédentes, **caractérisé en ce que** l'unité de mesure par ultrasons (10, 23, 37) est configurée pour pouvoir être disposée sur l'instrument de mesure (9, 22, 36) de manière interchangeable ou remplaçable.

8. Instrument de mesure (9, 22, 36) selon l'une des revendications précédentes, **caractérisé en ce qu'**un élément de génération d'ultrasons (47) de l'unité de mesure par ultrasons (10, 23, 37) est formé à l'intérieur (53) de la douille tubulaire (27, 46).

9. Instrument de mesure (9, 22, 36) selon l'une des revendications précédentes, **caractérisé en ce qu'**un élément de détection d'ultrasons (47) de l'unité de mesure par ultrasons (10, 23, 37) est formé à l'intérieur (53) de la douille tubulaire (27, 46).

10. Instrument de mesure (9, 22, 36) selon l'une des revendications précédentes, **caractérisé en ce que** l'instrument de mesure (9, 22, 36) est configuré de telle sorte qu'un mouvement relatif, notamment unique, de l'unité de mesure par ultrasons (10, 23, 37) par rapport à l'instrument de mesure (9, 22, 36) déclenche l'événement de palpage.

11. Instrument de mesure (9, 22, 36) selon l'une des revendications précédentes, **caractérisé en ce que** l'instrument de mesure (9, 22, 36) est configuré pour démarrer une mesure par ultrasons de l'unité de mesure par ultrasons (10, 23, 37) sur la base de la détection d'un événement de palpage.

12. Instrument de mesure (9, 22, 36) selon l'une des revendications précédentes, **caractérisé en ce que** l'unité de détection tactile possède une barrière photoélectrique.

13. Dispositif de mesure (8, 21, 33) comprenant un instrument de mesure (9, 22, 36) selon l'une des revendications précédentes et une unité d'émission et de réception destinée à commander l'instrument de mesure (9, 22, 36), le dispositif de mesure (8, 21, 33) étant configuré pour pouvoir être disposé sur une machine de mesure et/ou sur une machine-outil.

14. Dispositif de mesure (8, 21, 33) selon la revendication 13 précédente, **caractérisé en ce que** l'instrument de mesure (9, 22, 36) possède une interface (12) afin de connecter l'instrument de mesure à la machine-outil et/ou à la machine de mesure, l'instrument de mesure (9, 22, 36) étant configuré pour communiquer une valeur de mesure ultrasonique à une unité de commande (5) de la machine-outil et/ou à une unité de commande (5) de la machine de mesure.

15. Machine (1), notamment machine-outil ou machine de mesure, comprenant un instrument de mesure (9, 22, 36) selon l'une des revendications 1 à 12 précédentes ou un dispositif de mesure (8, 21, 33) selon l'une des revendications 13 ou 14.
